# EUROPÄISCHE PATENTANMELDUNG

(11) **EP 3 421 685 A1**
(43) Veröffentlichungstag der Anmeldung: **02.01.2019**
(21) Anmeldenummer: 17178023.2
(22) Anmeldetag: 27.06.2017
(51) Int. Cl.: E04F 15/10, B32B 27/30, B29C 47/06

(54) **PROFILKÖRPER-VERBUND**

(71) Anmelder: B-TEX GmbH & Co.KG, 41564 Kaarst (DE)
(72) Erfinder: BERNHARD, Otto, 41564 Kaarst (DE)
(74) Vertreter: Patentanwälte ter Smitten Eberlein-Van Hoof Rütten Partnerschaftsgesellschaft mbB

(57) **Zusammenfassung**

Die Erfindung betrifft einen Profilkörper-Verbund (10) mit
einem aus Kunststoff hergestellten Grundkörper (12) und einer auf der Oberfläche des Grundkörpers (12) angeordneten Schutzschicht (14), wobei die Schutzschicht (14) aus einem Naturfaser-Verbundwerkstoff hergestellt ist.

Ein derartig ausgestalteter Profilkörper-Verbunden ist kostengünstig herstellbar und weist ein niedriges Gewicht auf.

## Beschreibung

Die Erfindung betrifft einen Profilkörper-Verbund.

Außerdem betrifft die Erfindung ein Herstellungsverfahren zum Herstellen eines Profilkörper-Verbundes.

Aus dem Stand der Technik sind Profilkörper bekannt, welche aus Kunststoff hergestellt sind und deren Oberfläche die Optik und die Haptik eines aus Holz hergestellten Profilkörpers imitieren. Derartige Profilkörper sind üblicherweise aus einer Mischung aus Naturfaserpartikeln und Kunststoff hergestellt und werden beispielsweise als Bodendielen im Außen- und Innenbereich oder als Außenwandverkleidung eines Gebäudes eingesetzt. Dabei werden für die Verkleidung eines Gebäudes oder zum Auslegen eines Bodens mit Bodendielen eine Vielzahl an Profilkörpern nebeneinander angeordnet und ggfs. miteinander verbunden.

Derartige aus Kunststoff hergestellte Profilkörper weisen üblicherweise eine bessere Witterungsbeständigkeit, eine bessere chemische Beständigkeit und eine bessere UV-Licht-Beständigkeit als herkömmliche aus Holz hergestellte Profilkörper auf.

Die DE 10 2012 016 512 A1 offenbart beispielsweise einen Profilkörper mit einer holzähnlichen Oberfläche, wobei der gesamte Profilkörper aus einem Naturfaser-Verbundwerkstoff hergestellt ist und eine KunststoffMatrix mit darin eingebettetem Reisschalenpulver aufweist. Die Herstellung des Profilkörpers erfolgt durch ein Extrusionsverfahren, wobei das Kunststoff-Pulver und das Reisschalenpulver miteinander gemischt werden, das Kunststoff-Reisschalenpulver-Gemisch durch Wärmeeinwirkung in einen zähflüssigen Zustand umgewandelt wird und abschließend zu einem Profilkörper geformt wird. Dabei ist der gesamte Profilkörper aus dem Naturfaser-Verbundwerkstoff hergestellt.

Nachteilig an einer derartigen Ausgestaltung des Profilkörpers ist, dass der aus dem Naturfaser-Verbundwerkstoff hergestellte Profilkörper kostenintensiv ist und aufgrund der verdichtenden Wirkung der eingebetteten Naturfasern ein hohes Gewicht aufweist.

Der Erfindung liegt daher die Aufgabe zugrunde, einen Profilkörper bereitzustellen, welcher kostengünstig herstellbar ist und ein niedriges Gewicht aufweist.

Diese Aufgabe wird durch einen Profilkörper-Verbund mit den Merkmalen des unabhängigen Anspruchs 1 und ein Herstellungsverfahren gemäß dem korrespondierenden Anspruch 12 gelöst.

Der Profilkörper-Verbund weist einen Grundkörper und eine auf der Oberfläche des Grundkörpers angeordnete Schutzschicht auf, wobei die Schutzschicht aus einem Naturfaser-Verbundwerkstoff hergestellt ist.

Der Grundkörper ist aus einem Kunststoff, insbesondere aus einem thermoplastischen Kunststoff, hergestellt. Der Grundkörper weist keine Naturfasern auf, die den eingebetteten Naturfasern der Schutzschicht entsprechen. Gegebenenfalls weist der Grundkörper bzw. der den Grundkörper bildende Kunststoff Additive und/oder Füllstoffe auf, um beispielsweise durch Füllstoffe die Steifigkeit zu erhöhen oder durch Additive die Verarbeitung zu vereinfachen. Bevorzugt weist der Grundkörper überhaupt keine Naturfasern auf.

Die Schutzschicht weist eine Kunststoffmatrix mit darin eingebetteten Naturfaserpartikeln auf. Die Kunststoffmatrix ist bevorzugt ein thermoplastischer Kunststoff, beispielsweise PVC.

Durch die eingebetteten Naturfaserpartikel weist der die Schutzschicht bildende Naturfaser-Verbundwerkstoff eine höhere Dichte auf als der den Grundkörper bildende Kunststoff. Dadurch, dass der Grundkörper einen relativ großen Volumenanteil des Profilkörper-Verbunds einnimmt und die Schutzschicht einen relativ geringen Volumenanteil des Profilkörper-Verbunds einnimmt, wird ein Profilkörper bereitgestellt, welcher die Vorteile des Naturfaser-Verbundwerkstoffs aufweist, beispielsweise eine bessere Witterungsbeständigkeit, eine bessere chemische Beständigkeit und/oder eine bessere UV-Licht-Beständigkeit, und dennoch kostengünstig herstellbar ist und ein niedriges Gewicht aufweist. Außerdem ist der Profilkörper-Verbund recycelbar.

In einer bevorzugten Ausgestaltung weist der Naturfaser-Verbundwerkstoff, aus dem die Schutzschicht hergestellt ist, eine Kunststoffmatrix mit darin eingebettetem Reisschalenmehl auf. Das als Naturfaser eingesetzte Reisschalenmehl weist einen hohen Siliziumgehalt auf und ist dadurch wasser- und witterungsbeständiger als beispielsweise Holzmehl, wodurch ein durch die Wasseraufnahme verursachtes Aufquellen der Schutzschicht verhindert wird.

Bevorzugt ist der Grundkörper aus PVC hergestellt. PVC ist ein thermoplastischer Kunststoff, welcher kostengünstig herstellbar ist und eine gute Witterungsbeständigkeit sowie eine schwere Entflammbarkeit aufweist.

Vorzugsweise ist der Grundkörper ausschließlich aus einem geschämten PVC hergestellt, wodurch die Dichte und somit das Gewicht des Grundkörpers reduziert wird. Außerdem wird durch das geschäumte PVC die Schalldämpfung sowie die Wärmeisolierung im Vergleich zum nichtgeschäumten PVC erhöht. Eine erhöhte Schalldämpfung ist insbesondere bei Bodendielen vorteilhaft, da auf diese Weise die Trittgeräusche reduziert werden.

In einer bevorzugten Ausgestaltung weist die Schutzschicht eine Schutzschicht-Oberfläche mit einer Prägestruktur auf. Dabei kann eine beliebige Prägestruktur auf die Schutzschicht-Oberfläche aufgeprägt werden. Auf diese Weise kann beispielsweise eine Holz-Haptik und eine Holz-Optik an dem Profilkörper verwirklicht werden.

Vorzugsweise weist die Schutzschicht eine Schichtdicke von 1,0-2,0 mm auf, wodurch das Gewicht des Profilkörper-Verbunds besonders gering ist.

In einer vorteilhaften Ausgestaltung sind der Grundkörper und die Schutzschicht unmittelbar stoffschlüssig miteinander verbunden. Eine unmittelbare stoffschlüssige Verbindung ist eine Verbindung, bei der keine zusätzlichen Verbindungsstoffe, wie beispielsweise Kleber, zum Verbinden der beiden Bauteile benötigt werden. Ein Beispiel für eine unmittelbare stoffschlüssige Verbindung ist das Verbinden zweier aus Kunststoff hergestellter Bauteile im Herstellungsvorgang, wobei bei einer vordefinierten Verarbeitungstemperatur die beiden Bauteile miteinander verschweißen bzw. verschmelzen.

In einer bevorzugten Ausgestaltung weist der Grundkörper eine Verbindungsstruktur zum formschlüssigen Verbinden eines benachbarten Grundkörpers bzw. Profilkörper-Verbunds auf. Durch die Verbindungstruktur können eine Vielzahl von Profilkörper-Verbunden einfach großflächig verlegt werden, wobei durch die Verbindungsstruktur die Profilkörper-Verbunde zueinander positioniert werden und beispielsweise die Fugenbreite zwischen zwei Profilkörper-Verbunden durch die Verbindungsstruktur festgelegt wird.

Vorzugsweise weist die Verbindungsstruktur keine Schutzschicht auf. In einer bevorzugten Ausgestaltung weist der Grundkörper eine Sichtseite auf, wobei die Sichtseite die Schutzschicht aufweist, jedoch eine Nicht-Sichtseite, beispielsweise die Rückseite des Grundkörpers, nicht beschichtet ist. Dadurch werden die Herstellungskosten des Profilkörper-Verbundes reduziert.

Außerdem ist die Aufgabe der Erfindung ein kostengünstiges Herstellungsverfahren zum Herstellen eines Profilkörper-Verbundes bereitzustellen.

Die Aufgabe wird durch ein Herstellungsverfahren zum Herstellen eines Profilkörper-Verbundes mit den Merkmalen des unabhängigen Anspruchs 12 gelöst.

Das Herstellungsverfahren weist die folgenden Verfahrensschritte auf:
a. Aufschmelzen einer ersten Polymermasse in einen ersten Schmelzstrom, wobei die Polymemasse im erstarrten Zustand den Grundkörper bildet,
b. Aufschmelzen einer zweiten Polymermasse in einen zweiten Schmelzstrom, wobei die zweite Polymermasse im erstarrten Zustand die Schutzschicht bildet, und
c. Zusammenführen der beiden Schmelzströme unter Coextrusion.

Durch ein derartiges Herstellungsverfahren kann ein Profilkörper-Verbund, welcher einen Grundkörper und eine Schutzschicht aufweist, einfach und kostengünstig hergestellt werden. Dabei werden die beiden im erstarrten Zustand den Grundkörper und die Schutzschicht bildenden Polymermassen in jeweils einen Schmelzstrom aufgeschmolzen, die beiden Schmelzströme zusammengeführt und zur endgültigen Formgebung des Profilkörper-Verbundes gemeinsam in eine Form geleitet. Beim Zusammenführen der beiden Schmelzströme verbinden bzw. verschweißen sich diese miteinander und bilden eine stoffschlüssige Verbindung. Im Vergleich zu Profilkörpern, die ausschließlich aus einem Naturfaser-Verbundwerkstoff hergestellt sind, ist die Herstellung des Profilkörper-Verbundes, welcher einen aus Kunststoff hergestellten Grundkörper und eine aus einem Naturfaser-Verbundwerkstoff hergestellte Schutzschicht aufweist, energieeffizienter, wodurch die Herstellungskosten reduziert werden.

Es wird somit ein Profilkörper-Verbund geschaffen, welches kostengünstig herstellbar ist und ein geringes Gewicht aufweist. Außerdem wird ein Herstellungsverfahren zum Herstellen eines Profilkörper-Verbundes bereitgestellt, mit dem der Profilkörper-Verbund einfach und kostengünstig herstellbar ist.

Ein Ausführungsbeispiel eines erfindungsgemäßen Profilkörper-Verbundes ist in den Figuren dargestellt und nachfolgend beschrieben.
Figur 1 zeigt eine erfindungsgemäße Ausführung eines Profilkörper-Verbundes im Querschnitt.
Figur 2 zeigt einen Draufsicht des Profilkörper-Verbundes.

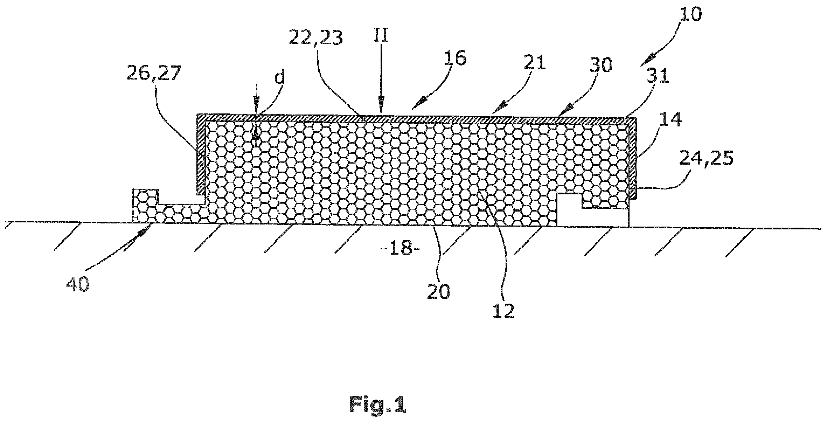

Die Figur 1 zeigt einen Profilkörper-Verbund 10, welcher als eine Bodendiele ausgeführt ist. Der Profilkörper-Verbund 10 weist einen Grundkörper 12 auf, welcher aus geschäumten PVC hergestellt ist und einen im Wesentlichen rechteckigen Querschnitt aufweist. Der quaderförmige Grundkörper 12 weist eine Grundfläche 20, eine Deckfläche 22, zwei Seitenflächen 24, 26 und zwei nicht dargestellte Endflächen auf. Die Grundfläche 20 liegt an einem Boden 18 an. Die Deckfläche 22 sowie die Seitenflächen 24, 26 bilden eine Sichtseite 21, so dass die Deckfläche 22 sowie die Seitenflächen 24, 26 im montierten Zustand des Profilkörper-Verbundes 10 für einen Betrachter sichtbar sind.

Der Profilkörper-Verbund 10 weist außerdem eine Schutzschicht 14 mit einer Schichtdicke d von 1,5 mm auf. Die Schutzschicht 14 ist auf den Sichtflächen 23, 25, 27 angeordnet, wobei die nicht-sichtbaren Bereiche des Grundkörpers 12, beispielsweise die Grundfläche 20, keine Schutzschicht 14 aufweisen.

Die Schutzschicht 14 ist aus einem Naturfaser-Verbundwerkstoff hergestellt. Der Naturfaser-Verbundwerkstoff ist aus einer Kunststoffmatrix, insbesondere aus einer PVC-Matrix, mit darin eingebettetem Reisschalenmehl hergestellt. Das Reisschalenmehl ist witterungsbeständig und wasserbeständig, weshalb Reisschalenmehl als Naturfaser für den Einsatz im Außenbereich besonders gut geeignet ist.

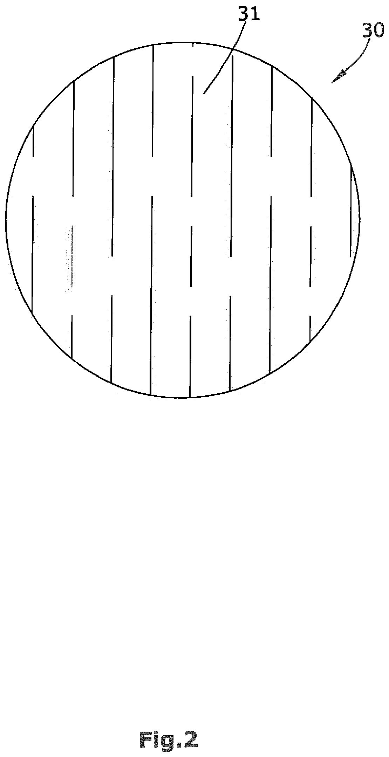

Wie in Figur 2 gezeigt, ist auf der Schutzschicht-Oberfläche 31 ist eine Prägestruktur 30 ausgebildet, wodurch die Holz-Optik und die Holz-Haptik erzeugt werden. Die Schutzschicht 14 kann weitere Füllstoffe bzw. Additive aufweisen, wodurch beispielsweise die Farbe der Schutzsicht 14 verändert werden kann.

Der Grundkörper 12 weist zum Verbinden benachbarter Grundkörper 12 zu einem großflächigen Bodenbelag eine Verbindungsstruktur 40 auf, wobei die Verbindungsstruktur 40 keine Schutzschicht aufweist. Durch die Verbindungsstruktur 40 werden die benachbarten Profilkörper-Verbunde 10 formschlüssig miteinander verbunden.

Die Herstellung de Profilkörper-Verbundes 10 erfolgt durch das Coextrusions-Verfahren. Dabei wird eine im erstarrten Zustand den Grundkörper bildende erste Polymermasse, im vorliegenden Fall PVC, aufgeschmolzen, und wird der aus der ersten Polymermasse entstandene Schmelzstrom mittels einer Förderschnecke zu einem Formgebungs-Werkzeug gefördert. Gleichzeitig wird eine im erstarrten Zustand die Schutzschicht bildende Polymermasse aufgeschmolzen, und wird der dabei entstandene Schmelzstrom mittels einer Förderschnecke zu dem Formgebunds-Werkzeug gefördert. In dem Werkzeug werden die beiden Schmelzströme zusammengeführt und die endgültige Form des Profilkörper-Verbundes hergestellt, wobei die beiden Schmelzströme in dem Formgebunds-Werkzeug bei einer vordefinierten Temperatur verschweißen und im erstarrten Zustand eine stoffschlüssige Verbindung bilden.

Der Schmelzvorgang sowie der Fördervorgang der Polymermassen erfolgt jeweils durch einen Doppelschnecken-Extruder. Bei einem Doppelschnecken-Extruder rotieren zwei Schnecken gegenläufig zueinander, wodurch die Polymermassen durch Reibung aufgeschmolzen werden und zum Formgebungs-Werkzeug gefördert werden.

Es sollte deutlich sein, dass auch andere konstruktive Ausführungsformen des Profilkörper-Verbundes im Vergleich zur beschriebenen Ausführungsform möglich sind, ohne den Schutzbereich des Hauptanspruchs zu verlassen.

## Patentansprüche

1. Profilkörper-Verbund (10) mit
einem aus Kunststoff hergestellten Grundkörper (12) und einer auf der Oberfläche des Grundkörpers (12) angeordneten Schutzschicht (14), wobei die Schutzschicht (14) aus einem Naturfaser-Verbundwerkstoff hergestellt ist.

2. Profilkörper-Verbund (10) nach Anspruch 1,
**dadurch gekennzeichnet, dass**
der Naturfaser-Verbundwerkstoff eine Kunststoffmatrix mit darin eingebettetem Reisschalenmehl aufweist.

3. Profilkörper-Verbund (10) nach Anspruch 1 oder 2,
**dadurch gekennzeichnet, dass**
der Grundkörper (12) aus PVC hergestellt ist.

4. Profilkörper-Verbund (10) nach Anspruch 3,
**dadurch gekennzeichnet, dass**
der Grundkörper (12) aus geschäumten PVC hergestellt ist.

5. Profilkörper-Verbund (10) nach einem der vorhergehenden Ansprüche,
**dadurch gekennzeichnet, dass**
die Schutzschicht (14) eine Schutzschicht-Oberfläche (31) mit einer Prägestruktur (30) aufweist.

6. Profilkörper-Verbund (10) nach einem der vorhergehenden Ansprüche,
**dadurch gekennzeichnet, dass**
die Schutzschicht (14) eine Schichtdicke d von 1,0-2,0 mm aufweist.

7. Profilkörper-Verbund (10) nach einem der vorhergehenden Ansprüche,
**dadurch gekennzeichnet, dass**
der Grundkörper (12) und die Schutzschicht (14) unmittelbar stoffschlüssig miteinander verbunden sind.

8. Profilkörper-Verbund (10) nach einem der vorhergehenden Ansprüche,
**dadurch gekennzeichnet, dass**
der Grundkörper (12) eine Verbindungsstruktur (40) zum formschlüssigen Verbinden eines benachbarten Grundkörpers aufweist.

9. Profilkörper-Verbund (10) nach Anspruch 8,
**dadurch gekennzeichnet, dass**
die Verbindungsstruktur (40) keine Schutzschicht aufweist.

10. Profilkörper-Verbund (10) nach einem der vorhergehenden Ansprüche,
**dadurch gekennzeichnet, dass**
der Grundkörper (12) eine Sichtseite (21) aufweist, wobei die Sichtseite (21) die Schutzschicht (12) aufweist.

11. Herstellungsverfahren zum Herstellen einer Profilkörper-Verbund nach den Ansprüchen 1 bis 10, **gekennzeichnet durch** die Verfahrensschritte:
a. Aufschmelzen einer ersten Polymermasse in einen ersten Schmelzstrom, wobei die Polymermasse im erstarrten Zustand den Grundkörper (12) bildet
b. Aufschmelzen einer zweiten Polymermasse in einen zweiten Schmelzstrom, wobei die zweite Polymermasse im erstarrten Zustand die Schutzschicht (14) bildet, und
c. Zusammenführen der beiden Schmelzströme unter Coextrusion.
